# EUROPEAN PATENT SPECIFICATION

(11) **EP 0 610 739 B1**
(45) Date of publication and mention of the grant of the patent: **30.07.1997**
(21) Application number: 94101238.7
(22) Date of filing: 28.01.1994
(51) Int. Cl.: B41M 3/00, B41M 1/36

(54) **Printed matter**
Gedruckter Gegenstand
Produit imprimé

(30) Priority: 12.02.1993 JP 47346/93
(43) Date of publication of application: 17.08.1994
(73) Proprietor: Kawashima, Kiyoharu, Suita-shi Osaka-fu (JP)
(72) Inventor: Kawashima, Kiyoharu, Suita-shi Osaka-fu (JP)
(74) Representative: Türk, Gille, Hrabal, Leifert

(56) References cited:
- EP-A- 0 403 903
- EP-A- 0 460 270
- DATABASE WPI,n 90-020141,Derwent Publications Ltd,GB; & JP-A-1301366(FUJI PHOTO FILM)05-12-1989

## Description

### BACKGROUND OF THE INVENTION

The present invention relates to a printed matter provided with a color developing area that is changed from a colorless to colored state by application of a color coupling additive, and capable of serving for attractive education and entertainment.

### FIELD OF THE INVENTION

It is widely known that such pH-indicator as phenolphthalein, for example, is changed from a substantially invisible colorless state to visible colored state by an effect of alkali and acid. And a printed matter with such color developing area as hidden letters and graphics printed by using such pH-indicator as a color coupler is suggested. Such printed matter is capable of providing for such effect of hiding the color developing area and users' high interest and entertainment, impressively presenting a content of the printed matter by an apparent change, unexpectedness and the like in the color development of color coupling area from a colorless to colored state, and its applications to such fields as picture books, coloring books, reference books and exercise books are demanded.

However, although such pH-indicators are present in various colors, because the color coupling pH ranges and achromatic pH ranges are respectively different and specific to them, it is very difficult to simultaneously chromatize and achromatize multiple pH-indicators with a single color coupling additive. In a printed matter using such pH-indicators, therefore, colors to be developed have been few in number, causing a monotonous appearance, and it was difficult to repeatedly effect the chromatic/achromatic operations in plural colors.

EP-A-0 403 903 discloses a print having a color-forming area and a discoloring area. The color-forming area is printed by an ink containing a first color-changing agent which changes from substantially invisible colorlessness to visibleness by applying a color former. The discoloring area is printed by an ink containing a second color-changing agent which changes a from substantially invisible colorlessness to visibleness by applying the color former and returns to invisible colorlessness state as the time passes naturally after changing its color.

EP-A-0 460 270 discloses a color changing print, wherein plural areas are printed by using plural types of color changing inks which develop into different colors from the substantially invisible colorless state by reaction with a color changing agent. By the emergence of print from colorlessness and by giving changes in the appearing colors, unexpectedness and entertainingness are provided so that an attractive education may be realized.

Thus, in consideration of such circumstances, the inventor repeatedly studied various dyes, pigments and the like. As a result, it was found that;
certain electron donative coloring compounds known as dyes reacted to a specific electron acceptive developing compound, and was developed from colorless to colored state; and
the effect of developing compound was lost by application of water after the coloration, specifically when zinc salicylate and bisphenol A were employed as developing compound, returned to the colorless state from the colored state, and the achromatic/chromatic changes could be effected repeatedly.

It is hence a primary object of the invention to provide a printed matter capable of allowing such colorful formation as hidden picture, increasing an appearance, unexpectedness and entertaining property, and chromatic/achromatic operations to be effected repeatedly.

According to the present invention there is provided a printed matter as defined in claim 1.

The color coupler is at least one electron donative coloring compound selected from a group A composed of
crystal violet lactone (blue);
malachite green lactone (green);
1.3 dimethyl-6-diethylaminofluoran (orange);
6-diethylamino-benzo[α]-fluoran (red);
3-cyclohexyl methylamino-6-methyl-7-anilinofluoran (black);
benzoyl leucomethylene blue (blue);
ethyl leucomethylene blue (blue);
methoxybenzoyl leucomethylene blue (blue);
2-(phenylimino ethanedilidene)-3.3-trimethyl-indoline (red);
1.3.3-trimethyl-indolino-7'-chloro-β-naphthospiropyran (purple);
di-β-naphthospiropyran (purple);
N-acetylauramine (yellow);
N-phenylauramine (yellow); and
rhodamine B lactam (red).

The color coupling additive is as defined in claim 1.

An electron donative coloring compound selected from the group A is developed from colorless state to a colored state specific to the particular coloring compound by coming in molecular contact with an electron acceptive developing compound selected from the group B. Because such color change is not based on a pH change as in prior art, various coloring compounds can be simultaneously developed to their specific colors by a single color coupling additive, and a colorful hidden picture and the like can be printed. Incidentally, colors after development are shown in parentheses, and three primaries are included in group A, and can be mixed as well for fine printing with complex and diversified tones such as photographs and pictures.

Besides, a printed matter once developed can be immediately achromatized by application of water specifically when zinc salicylate and bisphenol A are employed as developing compound, then such chromatic/achromatic operation can be effected repeatedly. Therefore, in the case the invention is applied to coloring books, reference books, exercise books and the like, it can be repetitively used, and a product value can be significantly increased.

### BRIEF DESCRIPTION OF THE DRAWINGS

An embodiment of the present invention will now be described, by way of example, referring to the attached diagrammatic drawings, in which;

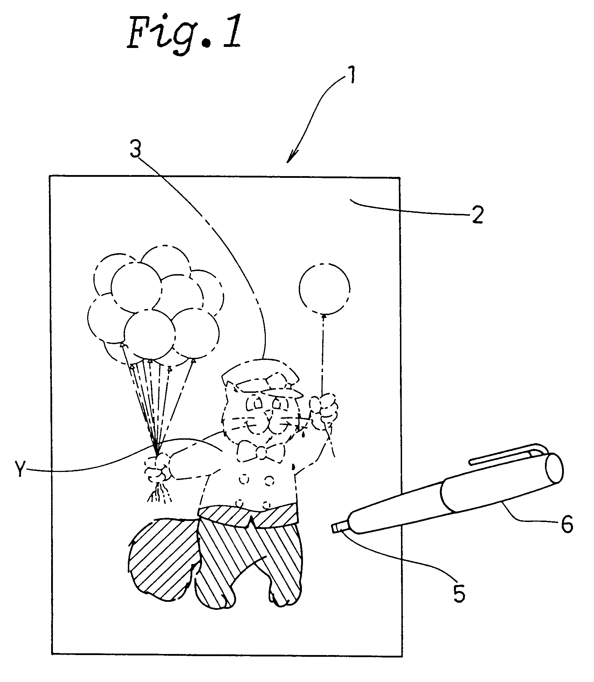

Fig. 1 is a front view showing an embodiment of the invention.

### DETAILED DESCRIPTION OF THE INVENTION

A printed matter 1 has, on a surface of paper 2, a color coupling area Y such as a hidden picture printed by an ink 3 containing a color coupler that is changed from colorless to colored state. And the color coupling area Y is developed from colorless state, and expressed in colored state by application of a color coupling additive 5 comprising a specified electron acceptive developing compound.

The ink 3 is an anhydrous liquid comprising a color coupler mixed with a vehicle. As a color coupler, one or more compounds selected from the group A composed of
crystal violet lactone;
malachite green lactone;
1.3 dimethyl-6-diethylaminofluoran;
6-diethylamino-benzo[α]-fluoran;
3-cyclohexyl methylamino-6-methyl-7-anilinofluoran;
benzoyl leucomethylene blue;
ethyl leucomethylene blue;
methoxybenzoyl leucomethylene blue;
2-(phenylimino ethanedilidene)-3.3-trimethyl-indoline;
1.3.3-trimethyl-indolino-7'-chloro-β-naphthospiropyran;
di-β-naphthospiropyran;
N-acetylauramine;
N-phenylauramine; and
rhodamine B lactam
can be used.

The structure of crystal violet lactone is as follows:

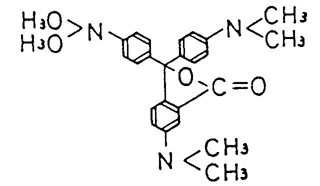

The structure of malachite green lactone is as follows:

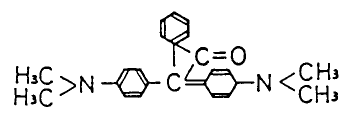

The structure of 1.3 dimethyl-6-diethylaminofluoran is as follows:

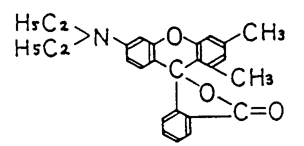

The structure of 6-diethylamino-benzo[α]-fluoran is as follows:

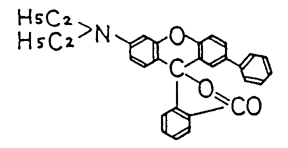

The structure of 3-cyclohexyl methylamino-6-methyl-7-anilinofluoran is as follows:

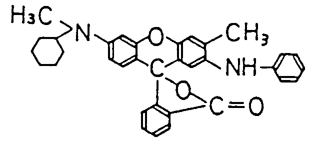

The structure of benzoyl leucomethylene blue is as follows:

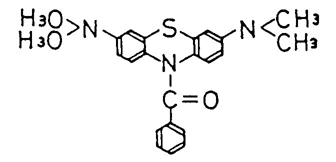

The structure of ethyl leucomethylene blue is as follows:

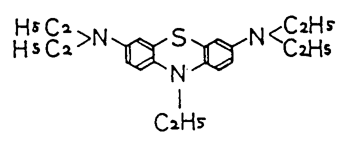

The structure of methoxybenzoyl leucomethylene blue is as follows:

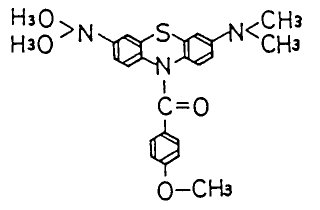

The structure of 2-(phenylimino ethanedilidene)-3.3-trimethyl-indoline is as follows:

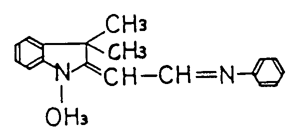

The structure of 1.3.3-trimethyl-indolino-7'-chloro-β-naphthospiropyran is as follows:

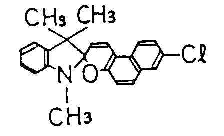

The structure of di-β-naphthospiropyran is as follows:

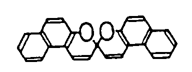

The structure of N-acetylauramine is as follows:

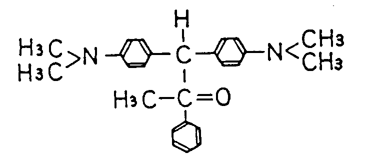

The structure of N-phenylauramine is as follows:

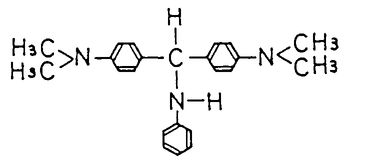

The structure of rhodamine B lactam is as follows:

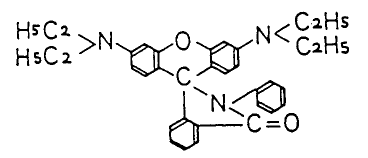

As a vehicle, for example, styrene resin and acrylic resin mixed with such solvent as dioctyl phthalate and dimethyl phthalate can be employed, and a colorless ink is obtained by agitating the vehicles together with the color coupler for about 20 minutes. Contents and formulation of the vehicles may be varied depending on types of print, and it is preferable to exclude a resin member as a vehicle, and reduce the viscosity for high-speed permeation and drying such as the case of high-speed printing. With the coloring compounds of group A, colors developed can be mixed by combining them, and printing with complex and diversified tones is enabled.

As the color coupling additive 5 for development of the ink 3, an electron acceptive developing compound selected from a group B composed of inorganic acids selected from hydrochloric acid, nitric acid, acetic acid and sulfuric acid and organic acids selected from citric acid, tartaric acid, malic acid and succinic acid in addition to zinc salicylate and bisphenol A is employed.

The structure of zinc salicylate is as follows:

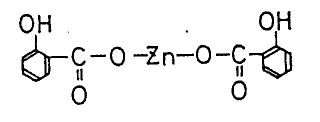

The structure of bisphenol A is as follows:

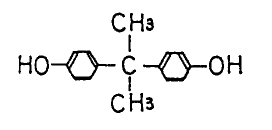

Specifically, out of those in the group B, zinc salicylate and bisphenol A react with the color coupler, and develops the ink 3, while the effect is lost by application of water, and the colored state can be immediately restored to colorless state. In addition, while the achromatized colorless state is maintained even after the water is dried up, by further applying such compound as zinc salicylate, it is changed chromatically, thus, the chromatic/achromatic operations can be repeatedly effected.

Such color coupling additive 5 may be an anhydrous liquid with the electron acceptive developing compound dispersed in a solvent of dimethyl phthalate and ethanol, and such liquid color coupling additive can be applied to the paper 2 by using an applicator 6 such as brush, pen and spray.

Alternatively, the color coupling additive 5 may be formed as a so-called solid crayon with the electron acceptive developing compound milled with carnauba wax, paraffin, haze wax, hardened oil and the like, in such case, the crayon itself forms the applicator 6. When the color coupling additive 5 is applied by such crayon, the paper 2 is coated with the color coupling additive 5 in uneven thickness, forming, in individual artist's touch, irregularities similar to brush streaks, traces of spatula and the like in oil painting, and the printed matter 1 can be expressed in a painting style or the like in conjunction with the complex tones. The color coupling additive 5 may be also formed like an oil paint with the electron acceptive developing compound mixed with such materials as high-viscosity liquid oil and alcohol, in such case, the printed matter 1 can be expressed in a painting style similar to the case of crayon.

Thus, the printed matter 1 of the invention can be used in combination with a solid, in addition to liquid, color coupling additive, and a high educational function can be obtained by using it, for example, in child education and school education, as it provides for learning how to use crayons, pens and paints through development of colors, patterns and the like.

### ( Example )

By agitating 6 parts by weight of crystal violet lactone, 10 parts by weight of styrene/acrylic resin, 40 parts by weight of dioctyl phthalate and 44 parts by weight of dimethyl phthalate for about 20 minutes by using an agitator, a colorless ink was formed, and a picture, letters and the like were printed with the ink by using a letterpress printing machine.

Additionally, by agitating 3 parts by weight of zinc salicylate, 68 parts by weight of dimethyl phthalate and 29 parts by weight of ethanol for 20 minutes, a liquid color coupling additive was obtained. Then, it was confirmed that the color coupling area printed was chromatized in blue color by applying the color coupling additive to the area, and achromatized swiftly by application of water, and the cycle of (development by color coupling additive) - (achromatic operation by water) - (drying) - (development by color coupling additive) can be effected repeatedly.

## Claims

1. A printed matter having in a surface thereof a color developing area comprising an ink layer containing a color coupler that is capable of being chromatized from substantially invisible colorless state to colored state by means of a color coupling additive, wherein
the color coupler is at least one electron donative coloring compound selected from a group A composed of
crystal violet lactone;
malachite green lactone;
1.3-dimethyl-6-diethylaminofluoran;
6-diethylamino-benzo[α]-fluoran;
3-cyclohexyl methylamino-6-methyl-7-anilinofluoran;
benzoyl leucomethylene blue;
ethyl leucomethylene blue;
methoxybenzoyl leucomethylene blue;
2-(phenylimino ethanedilidene)-3.3-trimethyl-indoline;
1.3.3-trimethyl-indolino-7'-chloro-β-naphthospiropyran;
di-β-naphthospiropyran;
N-acetylauramine;
N-phenylauramine; and
rhodamine B lactam, and
the color coupling additive is at least one electron acceptive developing compound selected from a group B composed of zinc salicylate, bisphenol A and inorganic acids selected from hydrochloric acid, nitric acid, acetic acid and sulfuric acid, and organic acids selected from citric acid, tartaric acid, malic acid and succinic acid.

## Patentansprüche

1. Gedruckter Gegenstand, der in einer Oberfläche davon einen Farbentwicklungsbereich aufweist, der eine Farbschicht, die einen Farbkuppler enthält, umfaßt, die fähig ist, aus einem im wesentlichen unsichtbaren farblosen Zustand in einen farbigen Zustand mit Hilfe eines Farbkupplungsadditivs überzugehen, worin der Farbkuppler mindestens eine Elektronendonor-Farbverbindung ist, die aus der Gruppe A ausgewählt wird, die sich zusammensetzt aus:
Kristallviolett-Lacton;
Malachitgrün-Lacton;
1,3-Dimethyl-6-diethylaminofluoran;
6-Diethylamino-benzo[α]-fluoran;
3-Cyclohexylmethylamino-6-methyl-7-anilinofluoran;
Benzoylleukomethylen-Blau;
Ethylleukomethylen-Blau;
Methoxybenzoyl-Leukomethylen-Blau;
2-(Phenyliminoethandiliden)-3,3-trimethyl-indolin;
1,3,3-Trimethyl-indolin-7'-chlor-β-naphthospiropyran;
Di-β-naphthospiropyran;
N-Acetylauramin;
N-Phenylauramin; und
Rhodamin-B-Lactam, und
das Farbkupplungsadditiv ist mindestens eine Elektronenakzeptor-Entwicklungsverbindung, die aus der Gruppe B ausgewählt ist, die sich aus Zinksalicylat, Bisphenol A und anorganischen Säuren, ausgewählt aus Salzsäure, Salpetersäure, Essigsäure und Schwefelsäure, und organischen Säuren, ausgewählt aus Zitronensäure, Weinsäure, Äpfelsäure und Bernsteinsäure, zusammensetzt.

## Revendications

1. Produit imprimé ayant sur une de ses surfaces, une aire de développement de couleur comprenant une couche d'encre contenant un coupleur de couleur qui est capable d'être chromatisé d'un état incolore pratiquement invisible à un état coloré au moyen d'un additif de couplage de couleur, dans lequel le coupleur de couleur est au moins un composé colorant donneur d'électrons choisi dans un groupe A constitué des
cristal violet - lactone ;
vert malachite - lactone;
1,3 - diméthyl - 6 - diéthylaminofluoranne ;
6 - diéthylamino - benzo(α) - fluoranne ;
3 - cyclohexyl - méthylamino - 6 - méthyl - 7 - anilinofluoranne ;
benzoyl - leuco - bleu de méthylène ;
éthyl - leuco - bleu de méthylène ;
méthoxybenzoyl - leuco - bleu de méthylène ;
2 - (phénylimino éthanedilidène) - 3,3 - triméthyl-indoline ;
1,3,3 - triméthyl-indolino - 7' - chloro - β - naphtospiropyranne ;
di - β -naphtospiropyranne ;
N - acétylauramine ;
N - phénylauramine ; et
rhodamine B lactame ; et
l'additif de couplage de couleur est au moins un composé de développement accepteur d'électrons choisi dans un groupe B constitué du salicylate de zinc, du bisphénol A et des acides minéraux choisis parmi l'acide chlorhydrique, l'acide nitrique, l'acide acétique et l'acide sulfurique, et des acides organiques choisis parmi l'acide citrique, l'acide tartrique, l'acide malique et l'acide succinique.
